# FASCICULE DE BREVET EUROPEEN

(11) **EP 0 853 192 B1**
(45) Date de publication et mention de la délivrance du brevet: **17.09.2003**
(21) Numéro de dépôt: 98400029.9
(22) Date de dépôt: 09.01.1998
(51) Int. Cl.: F02K 1/72

(54) **Inverseur de poussée à grilles à installation de verin de commande optimisée**
Schubumkehrvorrichtung mit optimierter Anordnung des Gitterbetätigungsorgans
Thrust reverser with optimized cascade actuator position

(30) Priorité: 09.01.1997 FR 9700135
(43) Date de publication de la demande: 15.07.1998
(73) Titulaire: Hurel-Hispano, 76700 Harfleur (FR)
(72) Inventeur: Vauchel, Guy Bernard, 76610 Le Havre (FR)
(74) Mandataire: Berrou, Paul

(56) Documents cités:
- EP-A- 0 109 219
- EP-A- 0 321 993
- EP-A- 0 413 635
- WO-A-96/34193
- US-A- 4 407 120

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

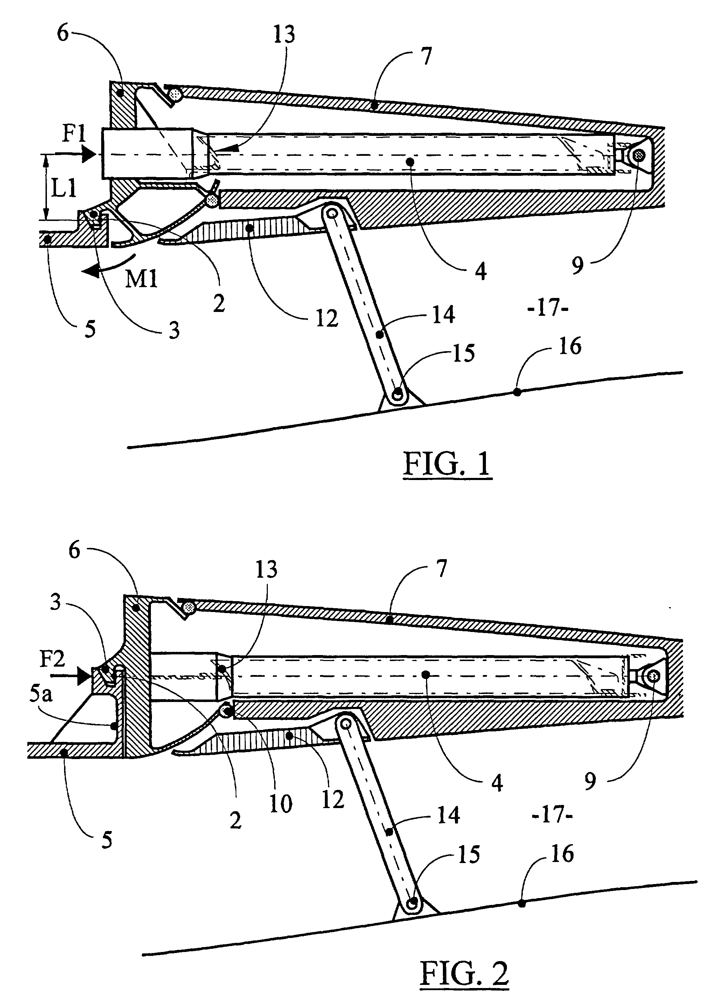

La figure 1 des dessins joints montre un exemple connu de réalisation d'un inverseur de poussée de ce type, appliqué à un turboréacteur à double flux.

Dans cet exemple d'application, un dispositif d'inversion dit à grilles dans lequel un capotage ou capot mobile 7, formant, lors du fonctionnement du turboréacteur en poussée directe, tout ou une partie de l'extrémité aval de la paroi externe du canal annulaire 17 de circulation de la veine de flux secondaire, est susceptible d'être déplacé axialement en direction aval au moyen d'un système de commande comportant par exemple des vérins 4 fixés sur la partie amont 6 de l'inverseur et un déplacement du capotage 7 vers l'aval entraîne le pivotement d'une pluralité de volets 12 qui viennent obturer le canal et dévier le flux pour former un flux inversé dont le guidage est obtenu au moyen d'un dispositif à grilles disposées sur la périphérie externe dudit canal et qui sont découvertes après déplacement vers l'aval dudit capotage 7.

Dans les réalisations connues d'un tel inverseur de poussée de turboréacteur, l'inverseur de poussée est constitué de deux parties, chaque partie comportant une partie demie-cylindrique dudit capotage aval 7 dont les moyens de déplacement comportent par exemple, deux vérins 4 et le pivotement desdits volets 12 est guidé par exemple par des biellettes 14 de liaison à un point fixe d'articulation 15 de biellette situé sur la paroi interne 16 dudit canal secondaire.

Des exemples de réalisation de tels inverseurs de poussée sont donnés par EP-A-0 109 219 et par US A-3 500 645.

Les dispositions connues et appliquées dans la réalisation de tels inverseurs de poussée entraînent cependant certains problèmes insuffisamment résolus. En effet, le capot mobile 7 se déplace axialement vers l'aval dans une direction parallèle à l'axe longitudinal de la nacelle et les vérins 4 sont placés généralement dans une zone proche des éléments de guidage en parties supérieure et inférieure du cadre 6 de la partie amont de l'inverseur.

Il en résulte un déplacement axial du capot mobile 7 important qui oblige à utiliser un vérin 4 très allongé.

L'utilisation d'un vérin 4 long pour le déplacement axial amène à placer ledit vérin dans une position assez haute dans une direction centrifuge sur le cadre 6. Cette disposition est nécessaire car l'accrochage du vérin 4 sur le capot mobile 7 se fait dans une partie où l'épaisseur de la structure de la nacelle est réduite, de plus la liaison 9 se trouve au niveau de lignes externes de la veine dites convexes c'est à dire qu'elles s'éloignent vers l'aval dans une direction centrifuge.

Les panneaux d'inversion ou volets 12 couverts par l'interne de la structure du capot mobile 7 et la partie inférieure du cadre 6, généralement caissonnée pour reprendre les efforts aérodynamiques qui agissent sur la structure de l'inverseur en transitant par le couteau 3 vers le moteur, qui ne peut pas être interrompu sans risque de diminuer sa rigidité, empêchent l'implantation du vérin 4 plus bas sur le cadre 6.

Le fait que le vérin est positionné de telle manière génère plusieurs problèmes d'ordre structural.

Un premier problème est représenté sur la figure 1. Pour les raisons déjà citées et afin de ne pas interrompre la virole d'interface entre l'inverseur et le moteur, le vérin 4 est placé dans une zone intermédiaire de la structure verticale du cadre 6. L'effort résultant F1, de l'action du vérin 4 sur la manoeuvre du capot mobile 7, et la distance L1, de la direction de l'effort vérin et de l'interface d'accostage du couteau 3 de l'inverseur sur la bride 5 du moteur, génère un couple de torsion M1 important dans la structure du cadre avant 6.

Un second problème est d'avoir une partie du vérin 4 et ses tuyauteries d'alimentation avec ses raccordements en amont du cadre avant 6 qui est une zone feu et donc oblige à prendre en compte ce risque dans l'élaboration de la structure.

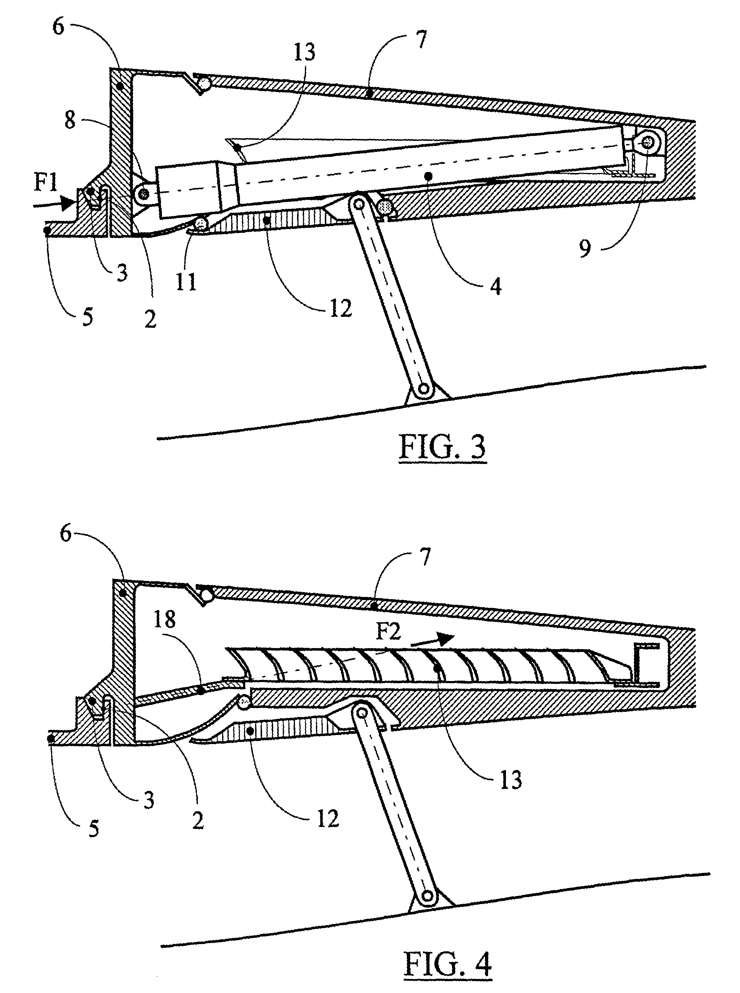

Ces problèmes ont des impacts structuraux et obligent à renforcer, et donc à alourdir, le cadre 6 sans toutefois annuler complètement la déformation en torsion de celui-ci. Un troisième problème dû à la disposition de la grille 13, visible sur la figure 4, qui elle même est éloignée du couteau 3, amplifie l'effet de couple sur la structure du cadre 6. En effet en phase d'inversion du jet, la grille 13 est fortement sollicitée par le flux dévié qui passe au travers des aubes. La composante d'effort sur la grille est retransmise vers le couteau 3 du cadre 6 amplifiant les effets négatifs créés par la disposition du vérin 4 comme expliqué précédemment.

Un des buts de l'invention est de proposer un moyen qui permet de réduire voire de supprimer le moment de torsion développé dans la structure fixe amont d'un inverseur de poussée lors du fonctionnement du vérin de commande du déplacement du capot mobile de l'inverseur.

Un autre but de l'invention est de ménager une installation du vérin et de la grille susceptible de réduire la masse de l'inverseur en évitant les inconvénients notés précédemment.

Ces buts sont atteints, conformément à l'invention, par un inverseur de poussée du type précité caractérisé en ce que l'axe géométrique longitudinal du vérin de commande est aligné avec un point aval de liaison dudit vérin avec le capot mobile d'inverseur et avec un point de contact au niveau du dispositif d'installation de l'inverseur sur le turboréacteur entre un couteau solidaire de la structure fixe amont d'inverseur et une bride d'interface solidaire du carter de turboréacteur. Avantageusement la résultante d'effort sur la grille générée par le flux circulant au travers des aubes est alignée de façon optimale avec le couteau solidaire de la structure fixe amont d'inverseur.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à grilles, en position fermée, d'un type connu et qui a fait précédemment l'objet d'une description ;
- la figure 2 représente dans une vue analogue à la figure 1, un inverseur de poussée à grilles, en position jet direct, selon un mode de réalisation de l'invention ;
- la figure 3 représente dans une vue analogue à la figure 1, un inverseur de poussée à grilles, en position jet direct, selon un autre mode de réalisation de l'invention
- la figure 4 représente dans une vue analogue à la figure 1, un inverseur de poussée à grilles, en jet direct, selon un mode d'application de l'invention pour les grilles.

Selon un mode de réalisation de l'invention représenté sur la figure 2, dans un inverseur de poussée de turboréacteur du type connu en soi et précédemment décrit en référence à la figure 1, un vérin 4 de commande de manoeuvre du capot mobile 7 est relié audit capot mobile en un point 9.

Le principe d'installation, déjà connu, de l'inverseur sur le turboréacteur est réalisé par un couteau 3, solidaire de la structure fixe amont 6 de l'inverseur, contenu dans une bride d'interface 5, solidaire du turboréacteur.

Le vérin 4 est installé parallèle à l'axe longitudinal de la nacelle à l'aval de la structure 6 de l'inverseur situé dans une zone intermédiaire de la structure 6. Il peut être fixe ou avec un débattement permis. Il est disposé au-dessus de l'interne de la structure du capot mobile 7 étanche en 10 sur la structure fixe aval du cadre 6. Un point moyen 2 de transit d'effort est considéré environ au milieu du recouvrement entre le couteau 3 et la bride d'interface 5 du côté de la partie aval du couteau 3.

Une disposition de l'invention est d'utiliser dans cet exemple la structure de la bride d'interface 5. La bride fait généralement partie de la structure du carter entourant la soufflante du moteur et est beaucoup plus rigide que la structure même de l'inverseur. Elle est positionnée et comporte un prolongement radial externe 5a pour que la ligne qui relie le point 2 de la structure fixe et le point 9 de la structure mobile intègre l'axe du vérin 4. De ce fait le moment de torsion du cadre 6 est supprimé et les efforts F2 induits par le vérin se diffusent mieux vers la bride d'interface 5 du turboréacteur.

L'accrochage du vérin peut se faire directement sur le cadre 6 celui-ci retransmettant les efforts dans la bride d'interface 5 par le couteau 3 solidaire du cadre 6, il peut aussi être associé à une structure indépendante du cadre reliée directement à la bride d'interface 5 du turboréacteur.

Le fait de positionner l'accrochage de la tête du vérin 4 en aval du cadre 6 procure d'autres avantages qui sont :
- la tuyauterie d'alimentation et ses raccordements sur le vérin sont dans une zone hors feu ;
- le cadre peut avoir une structure allégée et ainsi un gain de masse peut être envisagé.

La figure 3 représente une autre réalisation du mode de l'invention. Dans cet exemple le vérin 4 est fixé en aval du cadre 6, en partie inférieure, rotulé en un point 8 sur une ferrure assujettie au cadre. Le vérin 4 de commande de manoeuvre du capot mobile 7 est relié au capot mobile en un point 9. Le concept d'installation d'un vérin 4 bas rotulé sur l'aval de la structure du cadre peut positionner le vérin dans une direction non parallèle à l'axe longitudinal de la nacelle. Cette disposition permet de minimiser le débordement de la bride d'interface 5 par rapport au carter moteur. Dans cet exemple le vérin 4 interfère avec la structure interne du capot mobile 7 et l'étanchéité 10, réalisée sur la figure 2 ne peut plus être appliquée. Pour remédier à ce problème, une étanchéité 11 peut être rapportée localement sur un des volets 12 recouvrant en position jet direct le vérin 4, mais bien sûr, par des dispositions particulières, la structure du volet peut être réduite localement et permettre le contournement du corps du vérin 4 par ladite structure du capot mobile 7 en gardant son étanchéité en continue.

La figure 4 représente l'objet de l'invention étendue à la liaison de la grille 13 sur le cadre 6 pour lequel les mêmes dispositions géométriques évoquées précédemment peuvent être appliquées. En jet inversé, le flux circulant à travers les aubes de la grille 13 donne une composante d'effort F2 dont l'orientation est fonction de plusieurs facteurs comme la forme et l'orientation desdites aubes. C'est la direction de cette composante F2 au niveau de la liaison de la grille avec le cadre support 18 qui s'aligne avec le point moyen 2.

Le cadre support 18 peut aussi être aligné au plus près avec la composante d'effort F2 représentant la résultante moyenne des efforts rencontrés sur la grille complète.

Il est à noter que sur un même inverseur il est fréquemment rencontré une disposition différente entre-elles d'aubes de grilles . Pour cette raison, le cadre support 18 et les attaches amont des grilles peuvent prendre en compte ces changements d'orientation de composante d'effort F2 et évoluer en périphérie pour répondre à chaque cas aux critères de disposition établis précédemment.

## Revendications

1. Inverseur de poussée de turboréacteur à double flux comportant un capot mobile (7) formant lors du fonctionnement du turboréacteur en poussée directe l'extrémité aval de la paroi externe du canal annulaire (17) de circulation de la veine de flux secondaire qui est complétée par un ensemble de volets (12) formant un ensemble annulaire, ledit capot mobile (7) recouvrant en poussée directe un ensemble annulaire de grilles d'aubages (13) portées par la structure fixe de l'inverseur et lors du fonctionnement en inversion de poussée, sous l'action de vérins (4) fixés sur la structure fixe amont (6), ledit capot mobile (7) se déplace en translation vers l'aval, entraînant les volets (12) pivotant autour d'un point fixe d'articulation (15) solidaire de la paroi interne (16) du canal annulaire (17), par l'intermédiaire de biellettes (14), de manière à obturer ledit canal (17) et dévier le flux qui est éjecté à travers les grilles (13) en procurant une inversion de poussée **caractérisé en ce que** l'axe géométrique longitudinal du vérin de commande (4) est aligné avec un point aval de liaison (9) dudit vérin (4) avec le capot mobile (7) d'inverseur et avec un point de contact (2), au niveau du dispositif d'installation de l'inverseur sur le turboréacteur, entre un couteau (3) solidaire de la structure fixe amont (6) d'inverseur et une bride (5) d'interface solidaire du carter de turboréacteur.

2. Inverseur de poussée de turboréacteur à double flux selon la revendication 1 **caractérisé en ce que** ledit axe géométrique longitudinal du vérin de commande (4) est parallèle à l'axe longitudinal de la nacelle et ledit alignement avec l'axe géométrique du vérin (4) du point de contact (2) entre le couteau (3) d'inverseur et la bride (5) d'interface est obtenu au moyen d'un prolongement radial externe (5a) de ladite bride (5) d'interface, solidaire du carter du turboréacteur.

3. Inverseur de poussée de turboréacteur à double flux selon la revendication 1 **caractérisé en ce qu'**un point de liaison (8) dudit vérin de commande (4) avec la structure fixe amont (6) de l'inverseur et le point aval de liaison (9) dudit vérin (4) avec le capot mobile (7) d'inverseur sont alignés avec le point de contact (2), au niveau du dispositif d'installation de l'inverseur sur le turboréacteur, entre un couteau (3) solidaire de la structure fixe amont (6) d'inverseur et une bride (5) d'interface solidaire du carter de turboréacteur.

4. Inverseur de poussée de turboréacteur à double flux selon la revendication 3 **caractérisé en ce que**, en jet direct, l'étanchéité entre structure fixe amont (6) et partie mobile de l'inverseur est assurée au droit du vérin (4) au moyen d'un joint d'étanchéité (11) disposé sur le volet (12) qui recouvre le vérin (4).

5. Inverseur de poussée de turboréacteur à double flux selon l'une quelconque des revendications 1 à 4 **caractérisé en ce que** la forme et l'orientation des aubages composant la grille de déviation (13) et les supports de la grille (13) sont déterminés de manière que la composante d'effort (F2) généré par l'action du flux circulant à travers la grille (13) lors du fonctionnement en inversion de poussée présente une direction alignée avec le point de contact (2), au niveau du dispositif d'installation de l'inverseur sur le turboréacteur, entre le couteau (3) solidaire de la structure fixe amont (6) d'inverseur et une bride (5) d'interface solidaire du carter de turboréacteur.

## Patentansprüche

1. Schubumkehrvorrichtung für Zweikreis-TL-Triebwerke mit einer beweglichen Haube (7), die im Direktstrahlbetrieb des Turbotriebwerks das hintere Ende der äußeren Wand des Ringkanals (17) für die Zirkulation des Mantelstroms bildet, das durch eine Gruppe von Klappen (12) vervollständigt wird, die eine ringförmige Gesamtanordnung bilden, wobei diese bewegliche Haube (7) im Direktschub eine ringförmige Gesamtanordnung von Beschaufelungsgittern (13) abdeckt, die an dem festen Aufbau der Schubumkehrvorrichtung sitzen, und wobei sich diese bewegliche Haube (7) im Umkehrschubbetrieb unter Einwirkung von an dem vorderen festen Aufbau (6) befestigten Zylindern (4) in einer Vorschubbewegung nach hinten verschiebt und dabei die Klappen (12) mitnimmt, die mittels Schwingarmen (14) um einen festen Gelenkpunkt (15) schwenken, der mit der inneren Wand (16) des Ringkanals (17) fest verbunden ist, so dass sie diesen Kanal (17) verschließen und den Strom umlenken, der durch die Gitter (13) ausgestoßen wird, und dabei eine Schubumkehr erzeugen.
**dadurch gekennzeichnet,**
**dass** die geometrische Längsachse des Steuerzylinders (4) mit einem hinteren Verbindungspunkt (9) zwischen diesem Zylinder (4) und der beweglichen Haube (7) der Schubumkehrvorrichtung sowie mit einem Kontaktpunkt (2) im Bereich der Einbauvorrichtung der Schubumkehrvorrichtung an dem Turbotriebwerk zwischen einer Lasche (3), die mit dem festen Aufbau (6) der Schubumkehrvorrichtung fest verbunden ist, und einem Grenzflächen-Flansch (5), der mit dem Gehäuse des Turbotriebwerks fest verbunden ist, auf einer Linie liegt.

2. Schubumkehrvorrichtung für Zweikreis-TL-Triebwerke nach Anspruch 1,
**dadurch gekennzeichnet,**
**dass** die geometrische Längsachse des Steuerzylinders (4) parallel zur Längsachse der Gondel verläuft und dass dieses Fluchten des Kontaktpunkts (2) zwischen der Lasche (3) der Schubumkehrvorrichtung und dem Grenzflächen-Flansch (5) mit der Geometrieachse des Zylinders (4) mit Hilfe einer radialen, äußeren Verlängerung (5a) dieses Grenzflächen-Flanschs (5), der mit dem Gehäuse des Turbotriebwerks fest verbunden ist, erreicht wird.

3. Schubumkehrvorrichtung für Zweikreis-TL-Triebwerke nach Anspruch 1,
dadurch gekennzeuchnet,
dass ein Verbindungspunkt (8) zwischen diesem Steuerzylinder (4) und dem vorderen festen Aufbau (6) der Schubumkehrvorrichtung sowie der hintere Verbindungspunkt (9) zwischen diesem Zylinder (4) und der beweglichen Haube (7) der Schubumkehrvorrichtung mit dem Kontaktpunkt (2) im Bereich der Einbauvorrichtung der Schubumkehrvorrichtung an dem Turbotriebwerk zwischen einer Lasche (3), die mit dem vorderen festen Aufbau (6) der Schubumkehrvorrichtung fest verbunden ist, und einem Grenzflächen-Flansch (5), der mit dem Gehäuse des Turbotriebwerks fest verbunden ist, auf einer Linie liegen.

4. Schubumkehrvorrichtung für Zweikreis-TL-Triebwerke nach Anspruch 3,
**dadurch gekennzeichnet,**
**dass** im Direktstrahlbtrieb die Dichtigkeit zwischen dem vorderen festen Aufbau (6) und dem beweglichen Teil der Schubumkehrvorrichtung vor dem Zylinder (4) mit einer Dichtung (11) gewährleistet wird, die an der Klappe (12) angeordnet ist, die den Zylinder (4) abdeckt.

5. Schubumkehrvorrichtung für Zweikreis-TL-Triebwerke nach einem der Ansprüche 1 bis 4,
**dadurch gekennzeichnet,**
**dass** die Form und Ausrichtung der Schaufeln, die das Umlenkgitter (13) bilden, und die Träger des Gitters (13) dergestalt bestimmt sind, dass die Kraftkomponente (F2), die durch Einwirkung des im Umkehrschubbetrieb durch das Gitter (13) zirkulierenden Stroms erzeugt wird, eine Richtung aufweist, die mit dem Kontaktpunkt (2) im Bereich der Einbauvorrichtung der Schubumkehrvorrichtung an dem Turbotriebwerk zwischen einer Lasche (3), die mit. dem vorderen festen Aufbau (6) der Schubumkehrvorrichtung fest verbunden ist, und einem Grenzflächen-Flansch (5), der mit dem Gehäuse des Turbotriebwerks fest verbunden ist, auf einer Linie liegt.

## Claims

1. Bypass turbojet thrust reverser comprising a moving cover (7) which, when the turbojet is operating in direct thrust mode, forms the downstream end of the outer wall of the annular duct (17) through which the bypass stream flows, which wall is supplemented by a collection of flaps (12) forming an annular assembly, the said moving cover (7) in direct thrust mode covering an annular set of vane cascades (13) borne by the fixed structure of the reverser, and during operation in reverse thrust mode, under the action of actuators (4) fixed to the upstream fixed structure (6), the said moving cover (7) moves in translation in the downstream direction, driving the flaps (12) pivoting about a fixed pivot point (15) secured to the internal wall (16) of the annular duct (17), by means of link rods (14), so as to close off the said duct (17) and deflect the stream which is ejected through the cascades (13) thus reversing the thrust
**characterized in that** the longitudinal geometric axis of the control actuator (4) is aligned with a downstream point of connection (9) of the said actuator (4) to the reverser moving cover (7) and with a point of contact (2), at the device for installing the reverser on the turbojet, between an edge feature (3) secured to the reverser upstream fixed structure (6) and an interface flange (5) secured to the turbojet housing.

2. Bypass turbojet thrust reverser according to Claim 1, **characterized in that** the said longitudinal geometric axis of the control actuator (4) is parallel to the longitudinal axis of the nacelle and the said alignment with the geometric axis of the actuator (4) of the point of contact (2) between the reverser edge feature (3) and the interface flange (5) is obtained by means of an external radial continuation (5a) of the said interface flange (5) secured to the turbojet housing.

3. Bypass turbojet thrust reverser according to Claim 1, **characterized in that** a point of connection (8) of the said control actuator (4) with the upstream fixed structure (6) of the reverser and the downstream point of connection (9) of the said actuator (4) with the reverser moving cover (7) are aligned with the point of contact (2), at the device for installing the reverser on the turbojet, between an edge feature (3) secured to the reverser upstream fixed structure (6) and an interface flange (5) secured to the turbojet housing.

4. Bypass turbojet thrust reverser according to Claim 3, **characterized in that**, in direct jet mode, sealing between the upstream fixed structure (6) and the moving part of the reverser is provided, in line with the actuator (4), by means of a seal (11) positioned on the flap (12) which covers the actuator (4).

5. Bypass turbojet thrust reverser according to any one of Claims 1 to 4, **characterized in that** the shape and the orientation of the vanes that make up the deflection cascade (13) and the supports of the cascade (13) are determined such that the component of the force (F2) generated by the action of the stream passing through the cascade (13) during operation in reverse thrust mode has a direction aligned with the point of contact (2), at the device for installing the reverser on the turbojet, between the edge feature (3) secured to the reverser upstream fixed structure (6) and an interface flange (5) secured to the turbojet casing.
